# EUROPÄISCHE PATENTSCHRIFT

(11) **EP 2 597 295 B1**
(45) Veröffentlichungstag und Bekanntmachung des Hinweises auf die Patenterteilung: **24.10.2018**
(21) Anmeldenummer: 12007680.7
(22) Anmeldetag: 13.11.2012
(51) Int. Cl.: F02M 37/22, B01D 35/00

(54) **Handgeführtes Arbeitsgerät und Saugkopf zur Verbindung mit einer Kraftstoffleitung in einem handgeführten Arbeitsgerät**
Hand-operated implement and suction head for connecting with a fuel line in a hand-held work device
Appareil de travail manuel et tête aspirante pour la liaison avec une conduite de carburant dans un appareil de travail manuel

(30) Priorität: 25.11.2011 DE 102011119464
(43) Veröffentlichungstag der Anmeldung: 29.05.2013
(73) Patentinhaber: Andreas Stihl AG & Co. KG, 71336 Waiblingen (DE)
(72) Erfinder: Kinnen, Arno, D-70734 Fellbach (DE); Tost, Christopher, D-71563 Affalterbach (DE); Layher, Wolfgang, D-74354 Besigheim (DE); Dietenberger, Michael, D-71334 Waiblingen (DE); Mayer, Felix, D-71332 Waiblingen (DE)
(74) Vertreter: Reinhardt, Annette

(56) Entgegenhaltungen:
- WO-A1-01/43848
- DE-C1- 4 236 490
- US-A- 3 841 489
- US-A- 4 759 842

## Beschreibung

Die Erfindung betrifft ein handgeführtes Arbeitsgerät mit einem Kraftstofftank, in dem ein Saugkopf angeordnet ist und einen Saugkopf zur Verbindung mit einer Kraftstoffleitung in einem handgeführten Arbeitsgerät.

Aus der DE 42 36 490 C1 geht ein Saugkopf hervor. Zum Stand der Technik ist angegeben, dass sich innerhalb einer Gummikappe eines Saugkopfs ein aus Blei bestehendes Gewicht befinden kann.

Aus der gattungsgemäßen DE 199 53 986 A1 ist ein Saugkopf für einen Kraftstoffschlauch in einem handgeführten Arbeitsgerät bekannt. Um sicherzustellen, dass der Saugkopf in jeder Betriebslage des Kraftstofftanks im Kraftstoff liegt, ist im Gehäuse des Saugkopfs ein Gewichtskörper angeordnet.

In den Kraftstofftank können, insbesondere beim Befüllen des Kraftstofftanks, Verschmutzungen gelangen, die auch Metallspäne enthalten können. Diese Metallspäne können im Betrieb zu einer Behinderung der Kraftstoffzufuhr führen, und zwar insbesondere dann, wenn der Kraftstoff über ein elektromagnetisches Ventil dosiert wird, an dem die Metallspäne haften können.

Es ist bekannt, in Kraftstofffiltern einen Magneten anzuordnen. Ein solcher Magnet besteht üblicherweise aus Metall und besitzt deshalb ein vergleichsweise hohes Gewicht.

Aus der US 3,841,489 A, der US 4,759,842 und der WO 01/43848 A1 sind Einrichtungen zum Entfernen magnetischer Partikel aus einer Flüssigkeit, insbesondere aus Kraftstoff bekannt. Die Filtereinrichtungen sind in der Kraftstoffleitung angeordnet und besitzen einen Magneten, um magnetische Partikel aus dem Fluid zu entfernen.

In handgeführten Arbeitsgeräten ist ein hohes Gewicht unerwünscht.

Der Erfindung liegt die Aufgabe zugrunde, ein handgeführtes Arbeitsgerät der gattungsgemäßen Art zu schaffen, bei dem eine gute Kraftstoffreinigung bei geringem Gewicht erzielt wird. Eine weitere Aufgabe der Erfindung liegt darin, einen Saugkopf zur Verbindung mit der Kraftstoffleitung in einem handgeführten Arbeitsgerät zu schaffen, der eine gute Kraftstoffreinigung bei geringem Gewicht erzielt.

Diese Aufgabe wird bezüglich des Arbeitsgeräts durch ein handgeführtes Arbeitsgerät mit den Merkmalen des Anspruchs 1 und bezüglich des Saugkopfs durch einen Saugkopf mit den Merkmalen des Anspruchs 15 gelöst.

Es ist vorgesehen, den ohnehin vorhandenen Gewichtskörper mindestens teilweise als Magnet auszubilden. Dadurch kann ein zusätzlicher, das Gewicht des Arbeitsgeräts erhöhender Magnet entfallen.

Vorteilhaft besitzt der Saugkopf mindestens zwei Gewichtskörper. Insbesondere sind mindestens zwei der Gewichtskörper des Saugkopfs, insbesondere alle Gewichtskörper des Saugkopfs, mindestens teilweise als Magnet ausgebildet. Vorteilhaft ist mindestens ein Gewichtskörper, insbesondere alle Gewichtskörper, vollständig als Magnet ausgebildet.

Der Saugkopf besitzt insbesondere einen Deckel, an dem vorteilhaft eine Austrittsöffnung für Kraftstoff ausgebildet ist. Der Magnet ist vorteilhaft an einem Zwischenteil angeordnet, das zwischen dem Deckel und einem Gehäuse des Saugkopfs angeordnet ist. Dabei hält der Deckel den Magnet insbesondere an dem Zwischenteil, so dass sich ein einfacher Aufbau ergibt. Der Magnet kann auf einfache Weise an dem Zwischenteil angeordnet und durch den Deckel fixiert werden, so dass sich eine einfache Montage des Saugkopfs ergibt.

Das Zwischenteil ist vorteilhaft über eine erste Verbindung mit dem Gehäuse und über eine zweite Verbindung mit dem Deckel verbunden. Vorteilhaft besitzt die erste Verbindung erste Verbindungsmittel am Gehäuse und zweite Verbindungsmittel am Zwischenteil, die zusammenwirken, wenn das Zwischenteil am Gehäuse angeordnet ist. Die zweite Verbindung besitzt vorteilhaft entsprechend dritte Verbindungsmittel am Zwischenteil und vierte Verbindungsmittel am Deckel, die zusammenwirken, wenn der Deckel am Zwischenteil angeordnet ist. Die ersten Verbindungsmittel sind vorteilhaft so ausgebildet, dass sie sowohl mit den zweiten Verbindungsmitteln als auch mit den vierten Verbindungsmitteln verbindbar sind. Dadurch kann bei der Herstellung des Saugkopfs entschieden werden, ob ein Zwischenteil mit Magnet zwischen Gehäuse und Deckel angeordnet wird oder nicht. Der Deckel und das Gehäuse können sowohl für Saugköpfe mit Magnet als auch für Saugköpfe ohne Magnet identisch ausgebildet sein. Dadurch ergibt sich ein einfacher Aufbau, und für die Herstellung unterschiedlicher Saugköpfe werden nur wenige unterschiedliche Bauteile benötigt.

Vorteilhaft sind die erste Verbindung und die zweite Verbindung als Rastverbindungen ausgebildet. Die erste und die zweite Verbindung sind vorteilhaft lösbare Verbindungen. Eine einfache Gestaltung ergibt sich, wenn die Verbindungsmittel jeweils durch einen umlaufenden Rastrand gebildet sind. Vorteilhaft sind die ersten und dritten Verbindungsmittel als innerer Rastrand und die zweiten und vierten Verbindungsmittel als äußerer Rastrand ausgebildet. Dabei übergreift der äußere Rastrand jeweils den zugeordneten inneren Rastrand. Es kann jedoch auch am Deckel ein innerer und am Gehäuse ein äußerer Rastrand vorgesehen sein.

Vorteilhaft sind der Deckel und das Zwischenteil an der jeweils dem Gehäuse zugewandten Seite bezüglich ihrer Funktionsflächen gleich ausgebildet. Abschnitte, die keine Funktion besitzen, können auch unterschiedlich ausgebildet sein. Das Gehäuse und das Zwischenteil sind vorteilhaft an der jeweils dem Deckel zugewandten Seite gleich ausgebildet, wobei auch hier jeweils die Funktionsflächen gleich ausgebildet sind. Dadurch können weitere vom Deckel übernommene Funktionen eines Saugkopfs ohne Magnet und Zwischenteil wie beispielsweise die Fixierung eines Filterelements vom Zwischenteil übernommen werden.

Eine vorteilhafte Anordnung kann auch dadurch erreicht werden, dass der Magnet zwischen dem Deckel und einem Gehäuse des Saugkopfs angeordnet ist. Dadurch kann ein zusätzliches Zwischenteil entfallen. Es kann vorgesehen sein, dass der Gewichtskörper des Saugkopfs vollständig als Magnet ausgebildet ist. Dabei kann der Gewichtskörper beispielsweise einteilig und stabförmig ausgebildet sein. Es kann jedoch auch vorgesehen sein, dass ein Teil des Gewichtskörpers als magnetisches, stabförmiges Element ausgebildet ist und ein zweiter, ebenfalls magnetischer Teil des Gewichtskörpers in einem Zwischenteil gehalten ist. Es kann vorteilhaft sein, dass der Gewichtskörper am Deckel oder am Gehäuse des Saugkopfes angeordnet, insbesondere integriert ist. Der Magnet kann dabei beispielsweise eingeklipst, eingegossen oder eingeklebt sein.

Das Gehäuse besitzt vorteilhaft gegenüberliegend zum Deckel einen Boden, an dem der Gewichtskörper festgelegt ist. Der Gewichtskörper ist dabei insbesondere länglich ausgebildet, erstreckt sich vom Boden des Gehäuses ins Gehäuseinnere und ist mindestens teilweise von Kraftstoff umströmt. Ein Gewichtskörper ist dann länglich, wenn die Erstreckung parallel zur Längsmittelachse des Saugkopfs größer als die Erstreckung senkrecht zur Längsmittelachse ist. Der Gewichtskörper ist insbesondere stabförmig. Bei der Ausbildung des Gewichtskörpers als Magnet wird dadurch eine gute Abscheidewirkung von Metallspänen erreicht. Ein einfacher Aufbau ergibt sich, wenn das Gehäuse aus Kunststoff besteht und der Gewichtskörper mindestens teilweise in das Material des Gehäuses eingegossen ist. Vorteilhaft ist das Gehäuse mindestens teilweise zylindrisch ausgebildet, wobei am Umfang des Gehäuses mindestens eine Eintrittsöffnung für Kraftstoff ausgebildet ist, die von einem Sieb abgedeckt ist.

Ausführungsbeispiele der Erfindung werden im Folgenden anhand der Zeichnung erläutert. Es zeigen:
- Fig. 1: eine schematische Seitenansicht einer Motorsäge,
- Fig. 2: eine Seitenansicht des Saugkopfs und der Kraftstoffleitung der Motorsäge aus Fig. 1,
- Fig. 3: einen Schnitt durch den Saugkopf aus Fig. 2 im Bereich des Deckels,
- Fig. 4: eine perspektivische Darstellung des Saugkopfs ohne daran angeordnete Kraftstoffleitung,
- Fig. 5: einen Längsschnitt durch den Saugkopf und
- Fig. 6 bis Fig. 8: Längsschnitte durch Ausführungsbeispiele eines Saugkopfs.

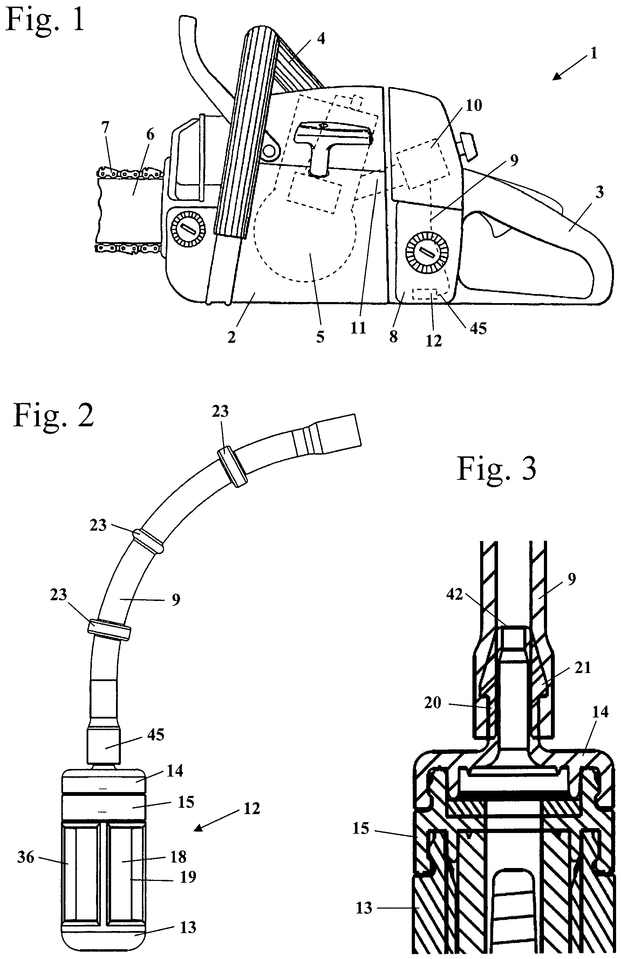

Fig. 1 zeigt als Ausführungsbeispiel für ein handgeführtes Arbeitsgerät eine Motorsäge 1. Die Erfindung ist insbesondere vorteilhaft für tragbare, handgeführte Arbeitsgeräte, die im Betrieb bewegt und geschwenkt werden, wie beispielsweise Motorsägen, Heckenscheren, Trennschleifer, Freischneider, Blasgeräte oder dergleichen. Die Motorsäge 1 besitzt ein Gehäuse 2, an dem ein hinterer Handgriff 3 und ein Griffrohr 4 angeordnet sind. Im Gehäuse 2 ist ein Verbrennungsmotor 5 angeordnet, der eine Sägekette 7 um eine Führungsschiene 6 antreibt. In das Gehäuse 2 ist ein Kraftstofftank 8 integriert, in den eine Kraftstoffleitung 9 mündet, die mit einer Kraftstoffzuführeinrichtung 10 verbunden ist. An dem in den Kraftstofftank 8 ragenden freien Ende 45 der Kraftstoffleitung 9 ist ein Saugkopf 12 fixiert. Die Kraftstoffleitung 9 kann zwischen der Kraftstoffzuführeinrichtung 10 und dem Saugkopf 12 einteilig ausgebildet und durch die Wand des Kraftstofftanks 8 hindurchgeführt sein. Es kann jedoch auch vorgesehen sein, die Kraftstoffleitung 9 aus mehreren Teilabschnitten zu bilden, die beispielsweise im Bereich der Wand des Kraftstofftanks miteinander verbunden sind.

Die Kraftstoffzuführeinrichtung 10 kann beispielweise ein Vergaser sein. Die Dosierung des Kraftstoffs kann aufgrund des im Ansaugkanal 11 herrschenden Unterdrucks oder zusätzlich über ein Ventil, insbesondere ein elektromagnetisches Ventil erfolgen. Es kann jedoch auch vorgesehen sein, den Kraftstoff direkt über ein Kraftstoffventil zuzuführen, beispielsweise in ein Kurbelgehäuse oder einen Überströmkanal des Verbrennungsmotors 5.

Wie Fig. 2 zeigt, ist die Kraftstoffleitung 9 gebogen ausgeführt und besitzt mehrere Verdickungen 23, die zur Stabilisierung und zur Positionierung dienen können. Die Kraftstoffleitung 9 besteht aus flexiblem Material, beispielsweise aus Gummi oder Kunststoff. Wie Fig. 2 zeigt, besitzt der Saugkopf 12 ein Gehäuse 13, das im Wesentlichen zylindrisch ausgebildet ist und mehrere rechteckige Eintrittsöffnungen 19 besitzt, die durch Längsstege 36 voneinander getrennt sind. Die Eintrittsöffnungen 19 sind jeweils von einem Sieb 18 abgedeckt, das groben Schmutz am Eindringen ins Gehäuse 13 hindert. Am Gehäuse 13 ist ein Zwischenteil 15 angeordnet. Das Zwischenteil 15 ist zwischen dem Gehäuse 13 und einem Deckel 14 des Saugkopfes 12 angeordnet. Am Deckel 14 ist das freie Ende 45 der Kraftstoffleitung 9 aufgeschoben.

Wie Fig. 3 zeigt, besitzt der Deckel 14 an seiner dem Gehäuse 13 abgewandten Seite einen Anschlussnippel 20 mit einer umlaufenden Rippe 21, auf die die Kraftstoffleitung 9 aufgeschoben ist. Am Anschlussnippel 20 ist eine Austrittsöffnung 42 für Kraftstoff ausgebildet, durch die der Kraftstoff aus dem Saugkopf 12 in die Kraftstoffleitung 9 strömt.

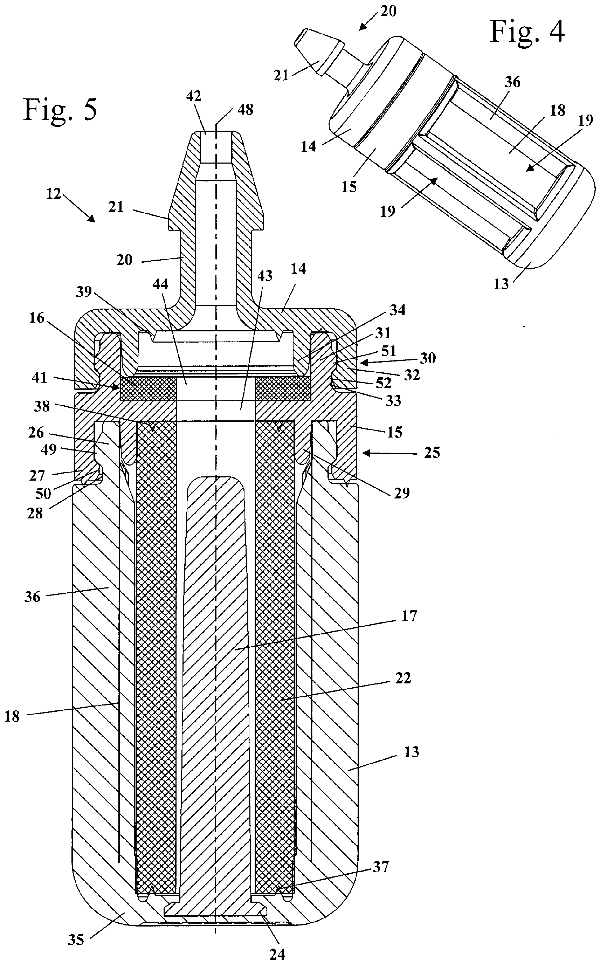

Der Anschlussnippel 20 mit der Rippe 21 ist auch in Fig. 4 gezeigt. Die Rippe 21 ist an einem Konus ausgebildet, der sich zum Deckel 14 hin erweitert, so dass die Kraftstoffleitung 9 auf den Anschlussnippel 20 leicht aufgeschoben, aber nur mit erhöhtem Kraftaufwand abgezogen werden kann.

Fig. 5 zeigt den Aufbau des Saugkopfs 12 im Einzelnen. Das Gehäuse 13 ist zylindrisch zu einer Längsmittelachse 48 des Saugkopfs 12 ausgebildet und an seiner dem Deckel 14 abgewandten Seite von einem Boden 35 verschlossen. Das Sieb 18 (Fig. 4) ist an den Längsstegen 36 des Gehäuses 13 eingegossen. Das Gehäuse 13 besteht aus Kunststoff. Im Inneren des Gehäuses 13 ist ein erster Gewichtskörper 17 angeordnet, der aus einem Material hoher Dichte, vorzugsweise aus Metall, Blei oder dergleichen, besteht. Als Gewichtskörper wird ein Element bezeichnet, das aus einem Material besteht, dessen Dichte größer als die Dichte des Gehäuses ist. Der Gewichtskörper 17 ist etwa stabförmig und länglich ausgebildet und besitzt einen Fuß 24, an dem der Gewichtskörper 17 verbreitert ausgebildet ist. Der Fuß 24 ist am Boden 35 in das Material des Gehäuses 13 eingegossen. Am Boden 35 ragt ein umlaufender unterer Positioniersteg 37 ins Gehäuse 13, an dem ein zylindrisches Filterelement 22 dichtend anliegt. Der Gewichtskörper 17 ragt ins Innere des Filterelements 22. Es kann vorgesehen sein, dass die Längsstege 36 das Filterelement 22 an seiner Außenseite stützen. Zwischen dem Sieb 18 und dem Filterelement 22 ist ein Abstand gebildet, der von den Längsstegen 36 im Wesentlichen überbrückt wird. Im Ausführungsbeispiel erstreckt sich der erste Gewichtskörper 17 über einen Großteil der parallel zur Längsmittelachse 48 gemessenen Höhe des Gehäuses 13, ragt jedoch nicht ins Zwischenteil 15. Der erste Gewichtskörper 17 kann sich jedoch auch bis ins Zwischenteil 15 oder durch das Zwischenteil 15 bis zum Deckel 14 erstrecken.

Das Gehäuse 13 besitzt an seiner dem Zwischenteil 15 zugewandten Seite einen inneren Rastrand 26, der von einem äußeren Rastrand 27 des Zwischenteils 15 übergriffen ist. Der äußere Rastrand 27 greift dabei mit einer Verdickung 50 in eine umlaufende Nut 28 am Gehäuse 13 ein und hintergreift eine Verdickung 49 am inneren Rastrand 26. Die Verdickungen 49 und 50 sind als umlaufende, wulstförmige Erhebungen ausgebildet. Der innere Rastrand 26 und der äußere Rastrand 27 bilden eine erste Verbindung 25, die als Rastverbindung ausgebildet ist. Wie Fig. 5 auch zeigt, besitzt das Zwischenteil 15 an seiner dem Filterelement 22 zugewandten Seite einen oberen Dichtsteg 38, der ebenfalls umlaufend ausgebildet ist und das Filterelement 22 an seiner dem Zwischenteil 17 zugewandten Seite dichtend hält und positioniert. Das Zwischenteil 15 besitzt eine mittige Öffnung 43, die die im Inneren des Filterelements 22 gebildete Öffnung verlängert und durch die Kraftstoff strömen kann. Das Zwischenteil 15 besitzt außerdem einen Ringsteg 29, der in den zwischen dem Gehäuse 13 und dem Filterelement 22 ausgebildeten Spalt ragt und so das Filterelement 22 senkrecht zur Längsmittelachse 48 positioniert. Das Zwischenteil ist scheibenförmig ausgebildet, wobei von der Scheibe die Rastränder 27 und 31, der Ringsteg 29 und der Dichtsteg 38 wegragen.

An der dem Deckel 14 zugewandten Seite des Zwischenteils 15 ist eine Aufnahme 41 für einen zweiten Gewichtskörper 16 gebildet, der als Magnet ausgebildet ist. Der zweite Gewichtskörper 16 ist scheibenförmig ausgebildet und besitzt eine mittige Öffnung 44, die ungefähr genau so groß wie die Öffnung 43 ist, so dass das Innere des Filterelements 22 mit den Öffnungen 43 und 44 einen durchgehenden Kanal für Kraftstoff bildet. An der dem Deckel 14 zugewandten Seite besitzt das Zwischenteil 15 einen inneren Rastrand 31, der von einem äußeren Rastrand 32 übergriffen ist. Der äußere Rastrand 32 greift dabei mit einer Verdickung 52 in eine Nut 33 des Zwischenteils 15 ein und fixiert so den Deckel 14 formschlüssig am Zwischenteil 15. Dabei hintergreift die Verdickung 52 eine Verdickung 51 am inneren Rastrand 31. Der innere Rastrand 31 bildet mit dem äußeren Rastrand 32 eine zweite Verbindung 30, die als Rastverbindung ausgebildet ist und die identisch zur ersten Rastverbindung 25 ist. Der innere Rastrand 31 des Zwischenteils 15 ist identisch zum inneren Rastrand 26 des Gehäuses 13 ausgebildet, und der äußere Rastrand 32 des Deckels 14 ist identisch zum äußeren Rastrand 27 des Zwischenteils 15 ausgebildet.

Am Deckel 14 ist ein ins Innere des Saugkopfs 12 gewandter Ringsteg 34 angeformt, der in den inneren Rastrand 31 des Zwischenteils 15 eingreift und der den zweiten Gewichtskörper 16 in Richtung der Längsmittelachse 48 sichert. In Umfangsrichtung ist der zweite Gewichtskörper 16 formschlüssig in der Aufnahme 41 gehalten. Am Deckel 14 ist außerdem ein Dichtsteg 39 ausgebildet, der identisch zum Dichtsteg 38 des Zwischenteils 15 ist. Der Dichtsteg 39 am Deckel 14 hat beim Saugkopf 12 keine Funktion. Die inneren und äußeren Rastränder 26, 27, 31, 32, die Ringstege 29, 34 und die Dichtstege 38, 39 sind Funktionsflächen. Das Zwischenteil 15 ist in den für die Funktion relevanten Elementen, also den Funktionsflächen, an der dem Gehäuse 13 zugewandten Seite identisch zum Deckel 14 und an der dem Deckel 14 zugewandten Seite identisch zum Gehäuse 13.

Dadurch, dass der als Magnet ausgebildete zweite Gewichtskörper an einem Zwischenteil 15 gehalten ist, das an der dem Gehäuse 13 zugewandten Seite identisch zu der dem Gehäuse 13 zugewandten Seite des Deckels 14 ausgebildet ist und an der dem Deckel 14 zugewandten Seite identisch zu der dem Deckel 14 zugewandten Seite des Gehäuses 13, kann der Deckel 14 auch direkt am Gehäuse 13 fixiert werden. Das Zwischenteil 15 mit dem zweiten Gewichtskörper 16 kann bei Arbeitsgeräten, bei denen keine magnetische Reinigung des Kraftstoffs vorgesehen oder zweckmäßig ist, auch entfallen. Für die Anordnung des als Magnet ausgebildeten zweiten Gewichtskörpers 16 wird lediglich das Zwischenteil 15 benötigt. Die weiteren Elemente des Saugkopfs 12 können unverändert bleiben. Es kann vorgesehen sein, zusätzlich zum Gewichtskörper 16 auch den Gewichtskörper 17 vollständig oder teilweise als Magnet auszubilden.

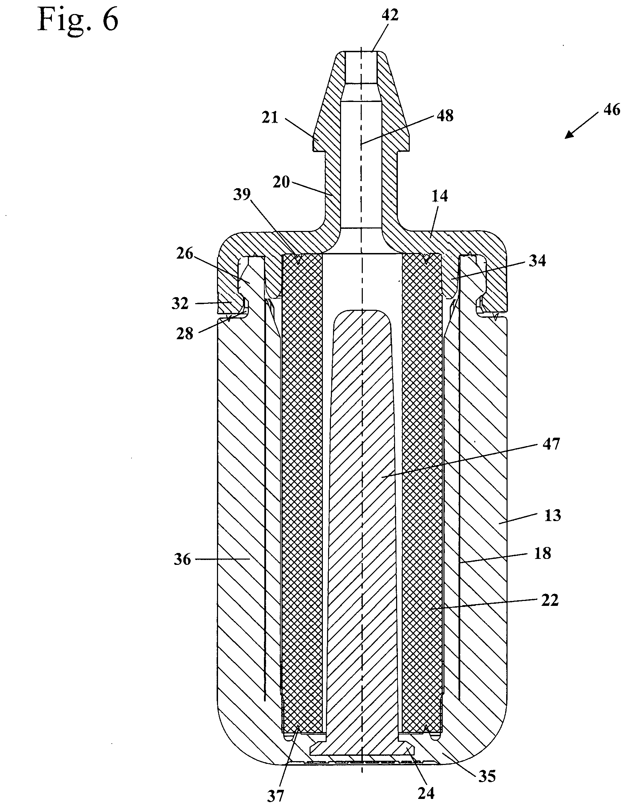

Fig. 6 zeigt ein Ausführungsbeispiel eines Saugkopfs 46, der einen Deckel 14 und ein Gehäuse 13 besitzt. Der Deckel 14 ist direkt am Gehäuse 13 befestigt. Der Saugkopf 46 besitzt einen Gewichtskörper 47, der vollständig als Magnet ausgebildet ist. Die Form des Gewichtskörpers 47 entspricht der des ersten Gewichtskörpers 17. Auch die weiteren Elemente des Saugkopfs 46, die mit gleichen Bezugszeichen wie in den Fig. 2 bis 5 bezeichnet sind, entsprechen diesen Elementen. Der Deckel 14 ist mit seinem äußeren Rastrand 32 am inneren Rastrand 26 des Gehäuses 13 eingerastet. Der Ringsteg 34 ragt in den Zwischenraum zwischen dem Filterelement 22 und dem Gehäuse 13 und fixiert das Filterelement 22 senkrecht zur Längsmittelachse 48. Die Abdichtung des Filterelements 22 am Deckel 14 erfolgt über den am Deckel 14 angeformten Dichtsteg 39.

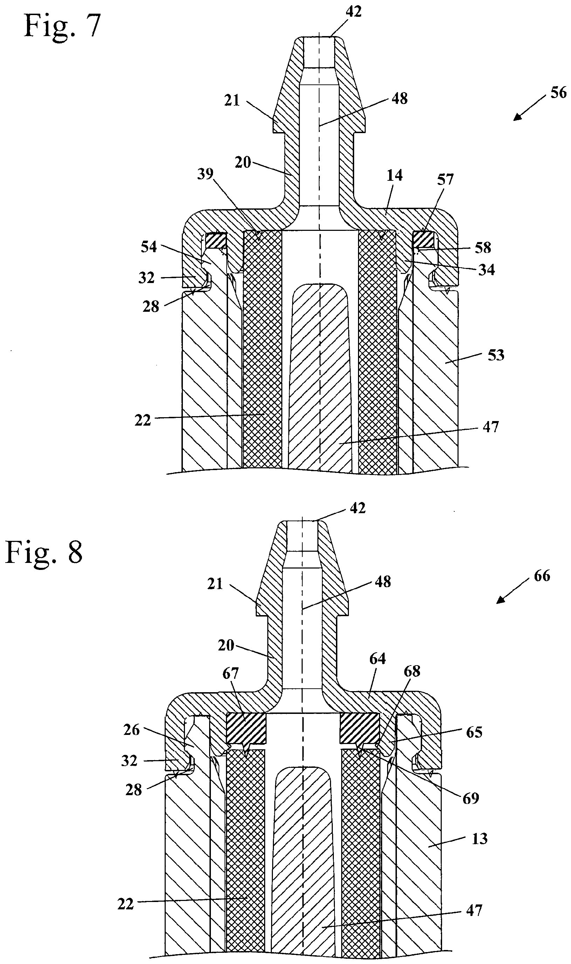

Fig. 7 zeigt ein weiteres Ausführungsbeispiel eines Saugkopfs 56. Der Saugkopf 56 besitzt ein Gehäuse 53, das von einem Deckel 14 verschlossen ist. Im Inneren des Gehäuses 53 ist ein Gewichtskörper 57 angeordnet, der dem in Fig. 6 gezeigten Gewichtskörper 47 entspricht. Das Gehäuse 53 entspricht in seinem Aufbau im Wesentlichen dem in den vorangegangenen Figuren beschriebenen Gehäuse 13. Gleiche Bezugszeichen kennzeichnen in allen Figuren einander entsprechende Elemente. Das Gehäuse 53 besitzt an seinem dem Deckel 14 zugewandten Bereich einen inneren Rastrand 54, der an dem äußeren Rastrand 32 des Deckels 14 einrastet. An der Stirnseite des Rastrands 54 liegt ein zweiter Gewichtskörper 57 an, der als ringförmiger Magnet ausgebildet ist. Der zweite Gewichtskörper 57 wird zwischen dem Deckel 14 und dem Gehäuse 53 gehalten, insbesondere geklemmt. Der zweite Gewichtskörper 57 ist außerhalb des Ringstegs 34 angeordnet. Das Filterelement 22 erstreckt sich innerhalb des Ringstegs 34 bis zum Deckel 14. Zusätzlich zur Klemmung oder alternativ kann der in Fig. 7 gestrichelt gezeigte Rastrand 58 vorgesehen sein, hinter dem der zweite Gewichtskörper 57 eingeklipst ist. Dadurch ist der zweite Gewichtskörper 57 am Deckel 14 gehalten.

Bei dem in Fig. 8 gezeigten Ausführungsbeispiel eines Saugkopfs 66 sind ein erster Gewichtskörper 47 und ein zweiter Gewichtskörper 67 vorgesehen. Der Saugkopf 66 besitzt ein Gehäuse 13, das dem in den vorangegangenen Figuren gezeigten Gehäuse 13 entspricht, sowie einen Deckel 64, der am Gehäuse 13 über eine Rastverbindung festgelegt ist. Zwischen dem Deckel 64 und dem Filterelement 22 ist benachbart zur Stirnseite des Filterelements 22 der zweite Gewichtskörper 67 angeordnet. Der zweite Gewichtskörper 67 besitzt einen umlaufenden, im Querschnitt etwa dreieckigen Dichtsteg 69, der das Filterelement dichtend fixiert. Der zweite Gewichtskörper 67 ist am Deckel 64 innerhalb eines Ringstegs 65 angeordnet. Der Ringsteg 65 besitzt einen bezogen auf die Längsmittelachse 48 radial nach innen gewandten Rastrand 68, hinter dem der zweite Gewichtskörper 67 eingerastet ist. Der zweite Gewichtskörper 67 ist vollständig als Magnet ausgebildet.

Durch die in den Figuren 7 und 8 gezeigte Anordnung des zweiten Gewichtskörpers 57, 67 zwischen dem Deckel 14, 64 und dem Gehäuse 13, 53 kann ein zusätzliches Zwischenteil 15 zur Fixierung des Magnets entfallen. Der Gewichtskörper 57, 67 kann auch am Deckel 14, 64 eingegossen oder eingeklebt sein. Der erste Gewichtskörper 17, 47 kann am Gehäuse 13, 53 eingeklebt, eingeklipst oder, wie in den Figuren gezeigt, eingegossen sein. Der erste Gewichtskörper 17, 47 kann sich auch bis zum Deckel 14, 64 erstrecken und zwischen dem Gehäuse 13, 53 und dem Deckel 14, 64 geklemmt gehalten sein.

## Patentansprüche

1. Handgeführtes Arbeitsgerät mit einem Kraftstofftank (8), in den eine flexible Kraftstoffleitung (9) ragt, wobei am freien Ende (45) der Kraftstoffleitung (9) ein Saugkopf (12, 46, 56, 66) angeordnet ist, der über die Kraftstoffleitung (9) mit einer Kraftstoffzuführeinrichtung (10) eines Verbrennungsmotors (5) des Arbeitsgeräts verbunden ist, und wobei der Saugkopf (12, 46, 56, 66) mindestens einen Gewichtskörper (16, 17, 47, 57, 67) besitzt,
**dadurch gekennzeichnet, dass** der Gewichtskörper (16, 47, 57, 67) mindestens teilweise als Magnet ausgebildet ist.

2. Arbeitsgerät nach Anspruch 1,
**dadurch gekennzeichnet, dass** der Saugkopf (12, 56, 66) mindestens zwei Gewichtskörper (16, 17, 47, 57, 67) besitzt.

3. Arbeitsgerät nach Anspruch 1 oder 2,
**dadurch gekennzeichnet, dass** mindestens ein Gewichtskörper (47, 57, 67) vollständig als Magnet ausgebildet ist.

4. Arbeitsgerät nach einem der Ansprüche 1 bis 3,
**dadurch gekennzeichnet, dass** der Saugkopf (12, 46, 56, 66) einen Deckel (14) besitzt.

5. Arbeitsgerät nach Anspruch 4,
**dadurch gekennzeichnet, dass** an dem Deckel (14) eine Austrittsöffnung (42) für Kraftstoff ausgebildet ist.

6. Arbeitsgerät nach Anspruch 4 oder 5,
**dadurch gekennzeichnet, dass** der Magnet an einem Zwischenteil (15) angeordnet ist, das zwischen dem Deckel (14) und einem Gehäuse (13) des Saugkopfs (12) angeordnet ist, wobei der Deckel (14) insbesondere den Magnet an dem Zwischenteil (15) hält.

7. Arbeitsgerät nach Anspruch 6,
**dadurch gekennzeichnet, dass** das Zwischenteil (15) über eine erste Verbindung (25) mit dem Gehäuse (13) und über eine zweite Verbindung (30) mit dem Deckel (14) verbunden ist.

8. Arbeitsgerät nach Anspruch 7,
**dadurch gekennzeichnet, dass** die erste Verbindung (25) erste Verbindungsmittel am Gehäuse (13) und zweite Verbindungsmittel am Zwischenteil (15) besitzt, und dass die zweite Verbindung (30) dritte Verbindungsmittel am Zwischenteil (15) und vierte Verbindungsmittel am Deckel (14) besitzt, wobei die ersten Verbindungsmittel mit den zweiten Verbindungsmitteln oder den vierten Verbindungsmitteln verbindbar sind.

9. Arbeitsgerät nach Anspruch 7 oder 8,
**dadurch gekennzeichnet, dass** die erste Verbindung (25) und die zweite Verbindung (30) als Rastverbindungen ausgebildet sind.

10. Arbeitsgerät nach einem der Ansprüche 6 bis 9,
**dadurch gekennzeichnet, dass** der Deckel (14) und das Zwischenteil (15) an der jeweils dem Gehäuse (13) zugewandten Seite gleich ausgebildet sind und dass das Gehäuse (13) und das Zwischenteil (15) an der jeweils dem Deckel (14) zugewandten Seite an ihren Funktionsflächen gleich ausgebildet sind.

11. Arbeitsgerät nach einem der Ansprüche 1 bis 5,
**dadurch gekennzeichnet, dass** der Gewichtskörper (17, 47) an einem Gehäuse (13) des Saugkopfs (12, 46) festgelegt ist.

12. Arbeitsgerät nach Anspruch 4 oder 5,
**dadurch gekennzeichnet, dass** der Magnet zwischen dem Deckel (14) und einem Gehäuse (13) des Saugkopfs (56) angeordnet ist.

13. Arbeitsgerät nach Anspruch 4 oder 5,
**dadurch gekennzeichnet, dass** der Magnet am Deckel (14) des Saugkopfs (66) festgelegt ist.

14. Arbeitsgerät nach einem der Ansprüche 4 bis 13,
**dadurch gekennzeichnet, dass** das Gehäuse (13) gegenüberliegend zum Deckel (14) einen Boden (35) besitzt, und dass der Gewichtskörper (17, 47) länglich ausgebildet ist, sich vom Boden (35) des Gehäuses (13) ins Gehäuseinnere erstreckt und mindestens teilweise von Kraftstoff umströmt ist.

15. Saugkopf zur Verbindung mit einer Kraftstoffleitung (9) in einem handgeführten Arbeitsgerät, wobei der Saugkopf (12, 46, 56, 66) mindestens einen Gewichtskörper (16, 17, 47, 57, 67) besitzt,
**dadurch gekennzeichnet, dass** der Gewichtskörper (16, 47, 57, 67) mindestens teilweise als Magnet ausgebildet ist.

## Claims

1. Hand-guided working implement with a fuel tank (8) into which a flexible fuel line (9) extends, wherein a suction head (12, 46, 56, 66) connected via the fuel line (9) to a fuel supply apparatus (10) of an internal combustion engine (5) of the working implement is located at the free end (45) of the fuel line (9), and wherein the suction head (12, 46, 56, 66) has at least one weight body (16, 17, 47, 57, 67), **characterised in that** the weight body (16, 17, 47, 57, 67) is at least partially designed as a magnet.

2. Working implement according to claim 1,
**characterised in that** the suction head (12, 56, 66) has at least two weight bodies (16, 17, 47, 57, 67).

3. Working implement according to claim 1 or 2,
**characterised in that** at least one weight body (47, 57, 67) is completely designed as a magnet.

4. Working implement according to any of claims 1 to 3,
**characterised in that** the suction head (12, 46, 56, 66) has a cover (14).

5. Working implement according to claim 4,
**characterised in that** an outlet opening (42) for fuel is formed on the cover (14).

6. Working implement according to claim 4 or 5,
**characterised in that** the magnet is located on an intermediate part (15) between the cover (14) and a housing (13) of the suction head (12), the cover (14) holding the magnet on the intermediate part (15) in particular.

7. Working implement according to claim 6,
**characterised in that** the intermediate part (15) is joined to the housing (13) via a first connection (25) and to the cover (14) via a second connection (30).

8. Working implement according to claim 7,
**characterised in that** the first connection (25) has first connecting means on the housing (13) and second connecting means on the intermediate part (15), and **in that** the second connection (30) has third connecting means on the intermediate part (15) and fourth connecting means on the on the cover (14), the first connecting means being connectable to the second connecting means or to the fourth connecting means.

9. Working implement according to claim 7 or 8,
**characterised in that** the first connection (25) and the second connection (30) are designed as latching connections.

10. Working implement according to any of claims 6 to 9,
**characterised in that** the cover (14) and the intermediate part (15) are designed identically on the side respectively facing the housing (12), and **in that** the housing (12) and the intermediate part (15) are designed identically at their functional surfaces on the side respectively facing the cover (14).

11. Working implement according to any of claims 1 to 5,
**characterised in that** the weight body (17, 47) is secured to a housing (13) of the suction head (12, 46).

12. Working implement according to claim 4 or 5,
**characterised in that** the magnet is located between the cover (14) and a housing (13) of the suction head (56).

13. Working implement according to claim 4 or 5,
**characterised in that** the magnet is secured to the cover (14) of the suction head (66).

14. Working implement according to any of claims 4 to 13,
**characterised in that** the housing (13) has a base (35) opposite the cover (14), and **in that** the weight body (17, 47) is designed to be oblong, extends from the base (35) of the housing (13) into the housing interior and is at least partially surrounded by flowing fuel.

15. Suction head for connection to a fuel line (9) of a hand-guided working implement, wherein the suction head (12, 46, 56, 66) has at least one weight body (16, 17, 47, 57, 67),
**characterised in that** the weight body (16, 47, 57, 67) is at least partially designed as a magnet.

## Revendications

1. Appareil tenu à la main avec un réservoir de carburant (8) dans lequel dépasse une conduite de carburant flexible (9), une tête d'aspiration (12, 46, 56, 66) qui est reliée par ladite conduite de carburant (9) à un dispositif d'amenée de carburant (10) d'un moteur à combustion interne (5) de l'appareil étant disposée sur l'extrémité libre (45) de la conduite de carburant (9), et la tête d'aspiration (12, 46, 56, 66) comportant au moins un poids (16, 17, 47, 57, 67),
**caractérisé en ce que** le poids (16, 47, 57, 67) est conçu au moins en partie comme un aimant.

2. Appareil selon la revendication 1,
**caractérisé en ce que** la tête d'aspiration (12, 56, 66) comporte au moins deux poids (16, 17, 47, 57, 67).

3. Appareil selon la revendication 1 ou 2,
**caractérisé en ce qu'**au moins un poids (47, 57, 67) est entièrement conçu comme un aimant.

4. Appareil selon l'une des revendications 1 à 3,
**caractérisé en ce que** la tête d'aspiration (12, 46, 56, 66) comporte un couvercle (14).

5. Appareil selon la revendication 4,
**caractérisé en ce qu'**une ouverture de sortie (42) pour le carburant est formée sur le couvercle (14).

6. Appareil selon la revendication 4 ou 5,
**caractérisé en ce que** l'aimant est disposé sur un élément intermédiaire (15) qui est disposé entre le couvercle (14) et un boîtier (13) de la tête d'aspiration (12), le couvercle (14) maintenant en particulier l'aimant sur ledit élément intermédiaire (15).

7. Appareil selon la revendication 6,
**caractérisé en ce que** l'élément intermédiaire (15) est relié par un premier raccordement (25) au boîtier (13), et par un deuxième raccord (30) au couvercle (14).

8. Appareil selon la revendication 7,
**caractérisé en ce que** le premier raccord (25) comporte des moyens de raccordement sur le boîtier (13) et des deuxièmes moyens de raccordement sur l'élément intermédiaire (15), **en ce que** le deuxième raccordement (30) comporte des troisièmes moyens de raccordement sur l'élément intermédiaire (15) et des quatrièmes moyens de raccordement sur le couvercle (14), les premiers moyens de raccordement étant aptes à être reliés aux deuxièmes ou aux quatrièmes moyens de raccordement.

9. Appareil selon la revendication 7 ou 8,
**caractérisé en ce que** le premier raccord (25) et le deuxième raccord (30) sont conçus comme des raccordements à enclenchement.

10. Appareil selon l'une des revendications 6 à 9,
**caractérisé en ce que** le couvercle (14) et l'élément intermédiaire (15) ont la même forme, sur leur côté tourné vers le boîtier (13), et **en ce que** le boîtier (13) et l'élément intermédiaire (15) ont la même forme de surface fonctionnelle sur leur côté tourné vers le couvercle (14).

11. Appareil selon l'une des revendications 1 à 5,
**caractérisé en ce que** le poids (17, 47) est fixé à un boîtier (13) de la tête d'aspiration (12, 46).

12. Appareil selon la revendication 4 ou 5,
**caractérisé en ce que** l'aimant est disposé entre le couvercle (14) et un boîtier (13) de la tête d'aspiration (56).

13. Appareil selon la revendication 4 ou 5,
**caractérisé en ce que** l'aimant est fixé au couvercle (14) de la tête d'aspiration (66).

14. Appareil selon l'une des revendications 4 à 13,
**caractérisé en ce que** le boîtier (13) comporte un fond (35) à l'opposé du couvercle (14), et **en ce que** le poids (17, 47) a une forme oblongue, s'étend du fond (35) du boîtier (13) jusqu'à l'intérieur dudit boîtier (13), et est entouré au moins en partie par un écoulement de carburant.

15. Tête d'aspiration à relier à une conduite de carburant (9) dans un appareil tenu à la main, ladite tête d'aspiration (12, 46, 56, 66) comportant au moins un poids (16, 17, 47, 57, 67),
**caractérisée en ce que** le poids (16, 47, 57, 67) est conçu au moins en partie comme un aimant.
